# EUROPÄISCHE PATENTSCHRIFT

(11) **EP 2 761 200 B1**
(45) Veröffentlichungstag und Bekanntmachung des Hinweises auf die Patenterteilung: **28.02.2018**
(21) Anmeldenummer: 12766089.2
(22) Anmeldetag: 27.09.2012
(51) Int. Cl.: F16D 65/092, F16D 55/226

(54) **SCHEIBENBREMSE, INSBESONDERE FÜR EIN NUTZFAHRZEUG**
DISK BRAKE, IN PARTICULAR FOR A UTILITY VEHICLE
FREIN À DISQUE, EN PARTICULIER POUR VÉHICULE UTILITAIRE

(30) Priorität: 28.09.2011 DE 102011115214
(43) Veröffentlichungstag der Anmeldung: 06.08.2014
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE)
(86) Internationale Anmeldenummer: PCT/EP2012/069094
(87) Internationale Veröffentlichungsnummer: WO 2013/045556

(56) Entgegenhaltungen:
- EP-A1- 0 856 680
- DE-A1- 4 418 702
- JP-A- 1 266 328
- JP-A- 7 305 734
- JP-A- 55 132 423
- US-E- R E24 870

## Beschreibung

Die Erfindung betrifft eine Scheibenbremse, insbesondere für ein Nutzfahrzeug, nach dem Oberbegriff des Anspruchs 1.

Zur Abbremsung eines Fahrzeuges werden Bremsbeläge mittels einer pneumatisch oder elektromotorisch angetriebenen Zuspanneinrichtung mit ihren Reibbelägen beidseitig gegen eine Bremsscheibe gepresst, wobei durch Umwandlung der kinetischen Energie Reibungswärme entsteht, die in erheblichem Maße zu einer Erwärmung der Bremsscheibe führt.

Durch diesen Wärmeeintrag erfolgt eine radiale Ausdehnung der Bremsscheibe, die üblicherweise ringförmig ausgebildet ist.

Bei konventionellen Bremsscheiben mit einem rohr- oder konusförmigen Halsabschnitt wird diese Ausdehnung jedoch behindert, wodurch sich die Bremsscheibe in einer auch unter dem Begriff "Schirmen" bekannten Art und Weise reversibel verformt.

Eine hohe thermische Belastung in Verbindung mit einer unterdrückten radialen Ausdehnung der Bremsscheibe kann zu hohen mechanischen Druckspannungen mit Überschreiten der Materialfließgrenze führen. Beim Abkühlen und beim Abbau der Spannungen kann es dann zur Überschreitung der Zugfestigkeit des Materials kommen, wodurch Oberflächenrisse entstehen, die sich immer weiter ausbreiten.

Andererseits führt das Schirmen zu einem ungleichmäßigen Tragbild der Bremsbeläge mit einer Konzentration der Wärmeeinbringung und lokaler Überhitzung der Bremsscheibe.

Um dies zu verhindern, sind bereits Lösungen vorgeschlagen worden, bei denen durch konstruktive Trennung des Reibrings der Bremsscheibe vom Bremsscheibenhals eine gleichmäßige Ausdehnung ermöglicht wird, durch die nicht so hohe Spannungen im Material entstehen und die Bremsscheibe plan bleibt. Jedoch sind diese Lösungen nur mit einem erheblichen Fertigungsaufwand zu realisieren.

Eine Optimierung des Wärmeeintrags, insbesondere um eine lokale Überhitzung der Bremsscheibe zu verhindern, wird durch einen elastischen, sogenannten Isobar-Bremsbelag erreicht, der allerdings ein sehr aufwändiges, platzraubendes Belagkonzept erfordert und der überdies auch nur für geringe Zuspannkräfte, wie sie bei Eisenbahnbremsen wirksam sind, geeignet ist.

In der JP 55-132423 A, der JP 1 266 328 A, der US R E24 870 E sowie der DE 44 18 702 A1 ist jeweils eine Scheibenbremse offenbart, deren Betätigung der Zuspanneinrichtung nicht, entsprechend der Gattung, pneumatisch oder elektromechanisch erfolgt, sondern hydraulisch.

Die JP 55-132423 A weist einen Bremsbelag mit einer im Querschnitt konkav gewölbten Belagträgerplatte auf, an der ein Bremskolben anliegt, wobei der Bremsbelag gegenüber dem Bremskolben in radialer Richtung, bezogen auf die Bremsscheibe, kippbar ist.

Die JP 1 266 328 A gibt einen Bremsbelag wieder, mit mindestens einer kalottenförmigen Ausnehmung auf der dem Reibbelag gegenüberliegenden Rückseite, in die ein konvex geformter Bremskolben eingreift.

Eine vergleichbare Konstruktion ist der US R E24 870 E zu entnehmen, während die DE 44 18 702 A1 eine konkav oder konvex gewölbte Belagträgerplatte aufweist, an der ein Bremskolben angreift, wobei diese Formgebung der Vermeidung von Quietschgeräuschen beim Abbremsen des Fahrzeugs dient.

Der Erfindung liegt die Aufgabe zugrunde, eine Scheibenbremse sowie einen Bremsbelag der gattungsgemäßen Art so weiterzuentwickeln, dass die Funktionssicherheit der Scheibenbremse verbessert und die Standzeit sowohl der Bremsscheibe wie auch der Bremsbeläge verlängert wird.

Diese Aufgabe wird durch eine Scheibenbremse mit den Merkmalen des Anspruchs 1 gelöst.

Durch die Erfindung wird eine thermisch bedingte radiale Ausdehnung der Bremsscheibe ermöglicht, so dass die zuvor beschriebenen Effekte bei der Behinderung dieser Ausdehnung nicht eintreten können. In der Wirkung entspricht die Lagerung der Bremsbeläge nun den erwähnten Teilbelagbremsscheiben, jedoch, im Gegensatz zu diesen, in ihrer Belastbarkeit, d.h. in der Fähigkeit Zuspannkraft zu übertragen, unverändert gegenüber den bei Nutzfahrzeugen üblicherweise eingesetzten Bremsbelägen.

Neben einer gleichmäßigeren Wärme- und Druckverteilung beim Schirmen der Bremsscheibe, kann sich bei optimaler Auslegung auch ein Radialschrägverschleiß der Bremsscheibe und der Bremsbeläge reduzieren, wie er bislang eintritt.

Besonders hervorzuheben ist, dass die Erfindung mit geringem konstruktiven und fertigungstechnischen Aufwand zu verwirklichen ist, also im Grunde kostenneutral.

Demgegenüber steht die wesentlich höhere Standzeit der Bremsscheibe sowie ein Zugewinn an Funktionssicherheit. Diese resultiert vor allem daraus, dass eine Rissbildung der Bremsscheibe bzw. des Bremsscheibenrings vermieden wird und ein vorzeitiger Austausch der Bremsscheibe nicht erforderlich ist.

In diesem Zusammenhang sei auch die erhöhte Betriebssicherheit der Scheibenbremse insgesamt erwähnt, die sich insbesondere daraus ergibt, dass die bislang bestehende Gefahr einer während des Betriebs der Scheibenbremse durch die Rissbildung eintretende Zerstörung der Bremsscheibe, unter Umständen sogar der gesamten Scheibenbremse, verhindert wird.

Während bei einer Festsattel-Scheibenbremse beide Bremsbeläge durch zwei jeweils mit mindestens einem Bremsstempel ausgestattete Zuspanneinrichtungen an die Bremsscheibe angepresst werden, funktioniert eine Schiebesattel-Scheibenbremse nach dem Reaktionsprinzip. Hierbei wird zunächst ein zuspannseitiger Bremsbelag mittels der Zuspanneinrichtung an die Bremsscheibe gepresst, die dann ein Widerlager für den Schiebesattel bildet, der unter Mitnahme des gegenüberliegenden, reaktionsseitigen Bremsbelages entgegen der ersten Zuspannrichtung geschoben wird, bis der reaktionsseitige Bremsbelag reibend an der Bremsscheibe zur Anlage kommt.

In diesem Fall ist die reaktionsseitige Belagträgerplatte nach der Erfindung gelenkig, vorzugsweise kippbar an der rückseitigen Wandung des Bremssattels gelagert, wozu die Wand des Bremssattels und die dieser zugewandte Belagträgerplatte entsprechend konfiguriert sind.

Nach der Erfindung ist hierzu eine im Querschnitt konvex gewölbte Erhebung an die Belagträgerplatte oder die Wand des Bremssattels angeformt, die in Korrespondenz mit einer der Kontur des Vorsprungs angepassten Ausnehmung des gegenüberliegenden, sich daran abstützenden Teiles steht. Dabei erstreckt sich die Erhebung quasi in Form einer Leiste in Längsrichtung des Bremsbelages, quer zur Achse der Bremsscheibe.
Denkbar ist, das Druckstück derart gelenkig an der Stellspindel anzubinden, dass eine Kippbewegung in radialer Richtung der Bremsscheibe möglich ist. In diesem Fall können die Kontaktflächen des Druckstücks und der Belagträgerplatte eben sein oder eine andere Kontur aufweisen.
Die Erhebung oder die Ausnehmung können statt unmittelbar an bzw. in der Belagträgerplatte auch in einer daran anliegenden separaten Druckplatte vorgesehen sein.
Weitere vorteilhafte Ausbildungen der Erfindung sind in den Unteransprüchen gekennzeichnet.
Ausführungsbeispiele der Erfindung werden nachfolgend anhand der beigefügten Zeichnungen beschrieben. Es zeigen:
- Figuren 1-3: verschiedene Ausführungsbeispiele einer erfindungsgemäßen Scheibenbremse, jeweils in einer geschnittenen Teilansicht
- Figur 4: Ausführungsbeispiel eines Bremsbelages gemäß der Erfindung
- Figur 5 :: Ausführungsbeispiel mit einer Belagträgerplatte mit kalottenförmigen Ausnehmungen
- Figur 6: eine Einzelheit der Scheibenbremse in einer Seitenansicht.

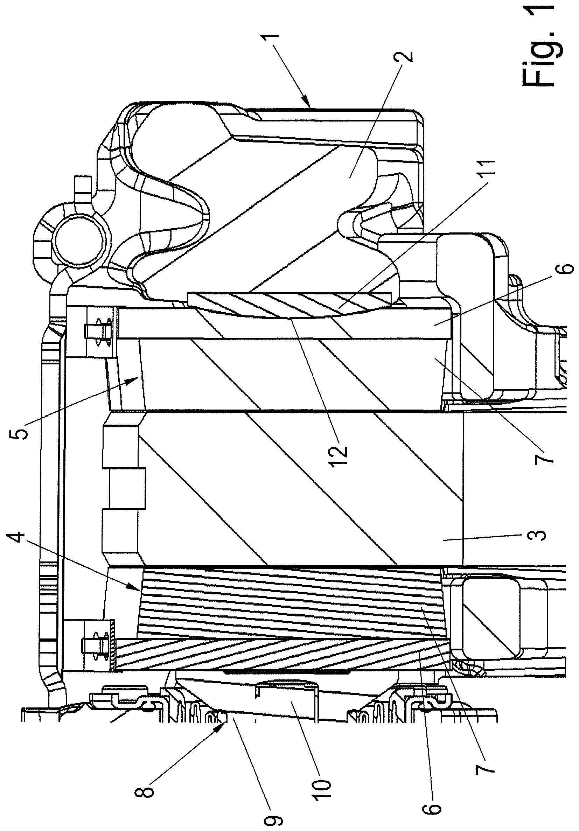

In den Figuren 1-3 ist jeweils ein Teilausschnitt einer Scheibenbremse, insbesondere für ein Nutzfahrzeug, dargestellt, mit einem eine Bremsscheibe 3 übergreifenden als Schiebesattel ausgebildeten Bremssattel 1 mit zwei, beidseitig gegen die Bremsscheibe 3 pressbaren Bremsbelägen 4, 5, die jeweils eine Belagträgerplatte 6 und einen darauf befestigten Reibbelag 7 aufweisen.
Im Bremsbelag 4, der zuspannseitig angeordnet ist, greift ein Bremsstempel 8 an, der eine Stellspindel 9 sowie ein daran drehbar gehaltenes Druckstück 10 aufweist, das an der Belagträgerplatte 6 des Bremsbelages 4 anliegt, wobei der Bremsstempel 8 Bestandteil einer Zuspanneinrichtung ist, mit der der Bremsstempel 8 gegen den Bremsbelag 4 und damit gegen die Bremsscheibe 3 im Falle einer Bremsung pressbar ist.

Bei dem in der Figur 1 gezeigten Ausführungsbeispiel ist der reaktionsseitige Bremsbelag 5 in radialer Richtung der Bremsscheibe 3 kippbar gelagert.

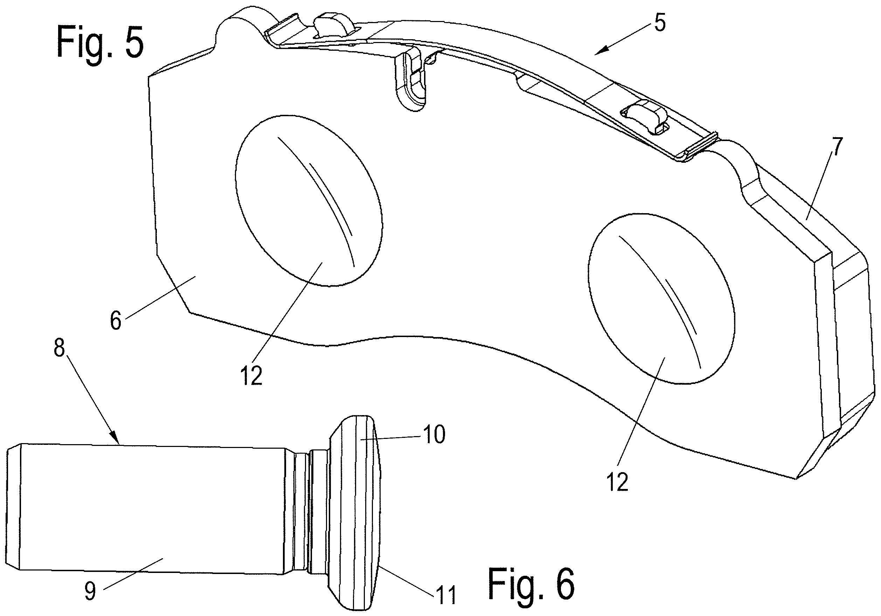

Dazu weist die Belagträgerplatte 6 kalottenförmige Ausnehmungen 12 auf, wie sie in der Figur 5 als ein Ausführungsbeispiel des Bremsbelages 5 erkennbar ist, wobei hier zwei abständig zueinander angeordnete Ausnehmungen 12 vorgesehen sind, in die ballig ausgeformte Erhebungen 11 einer rückseitigen Wandung des Bremssattels 1 einliegen.

Dabei sind die Erhebungen 11 durch in die Wand 2 eingebrachte Einsätze gebildet, die damit form-, reib- oder stoffschlüssig verbunden sind.

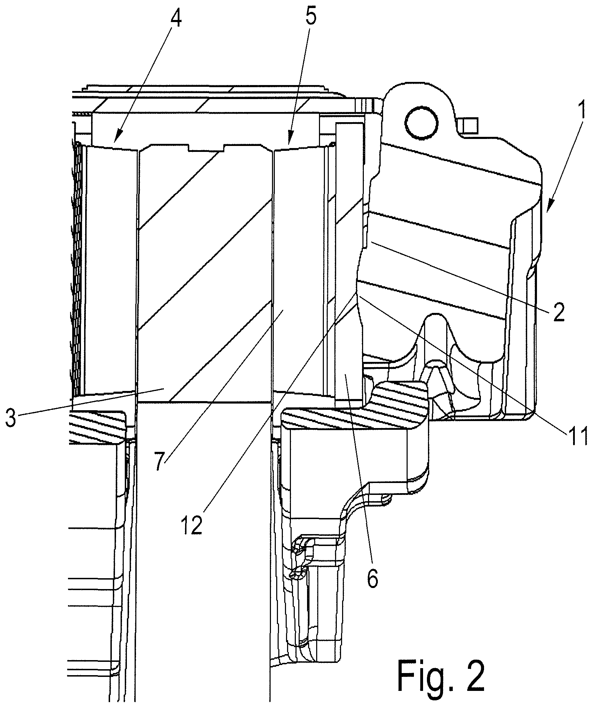

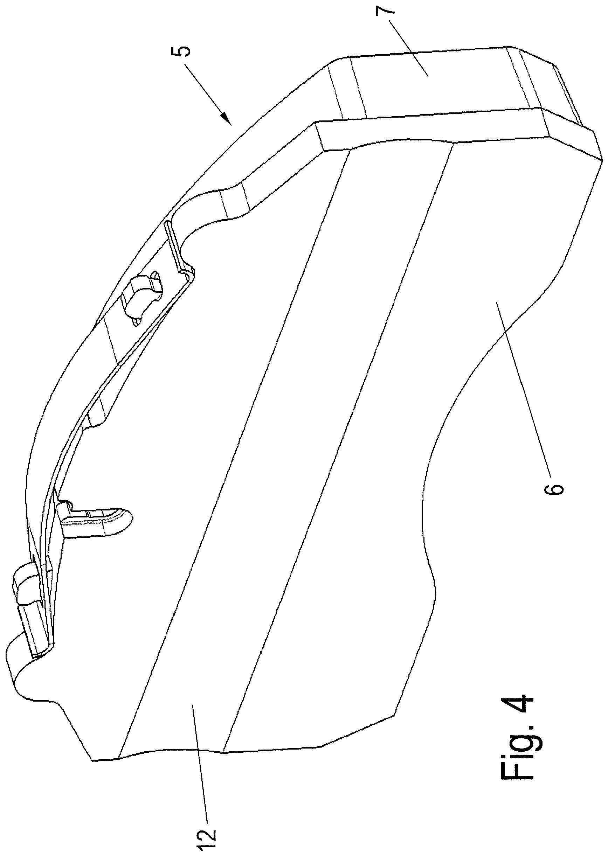

Bei der in der Figur 2 gezeigten Variante, die als Bremsbelag ihre Entsprechung in der Figur 4 findet, ist die Erhebung 11 als eine im Querschnitt konvex geformte Leiste ausgebildet, die in eine daran angepasste, sich über die gesamte Länge der Belagträgerplatte 6 erstreckende, als Kehle ausgebildete Ausnehmung 12 eingreift.

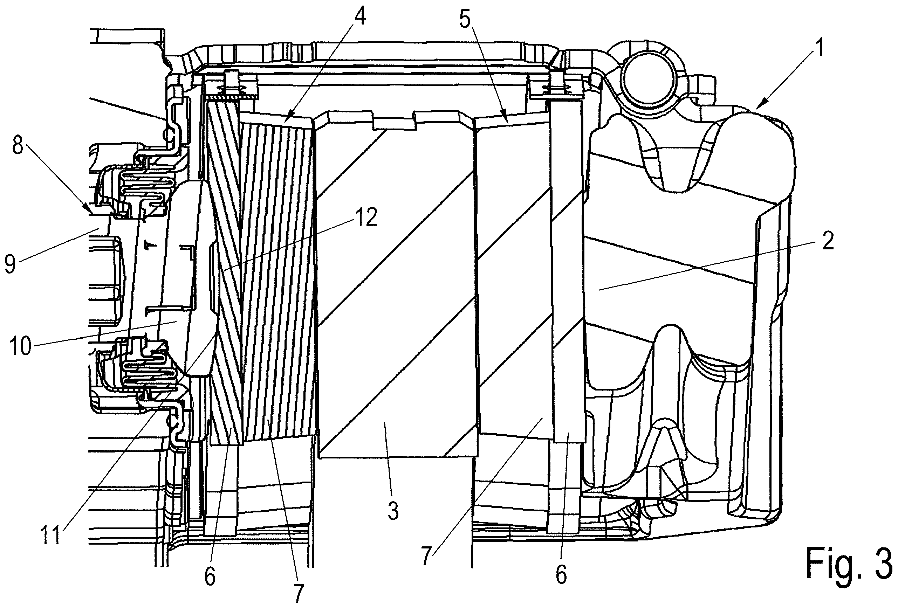

Während die Erhebung 11 in den aus Gusseisen bestehenden Bremssattel 1 beim Gießen angeformt sein kann, kann die Ausnehmung 12 bei dem Bremsbelag gemäß den Figuren 4 und 5 spanend oder durch Prägen eingebracht sein, wenn die Belagträgerplatte 6 aus Blech besteht. Bei einer Ausbildung als Gussteil sind die Ausnehmungen 12 ebenfalls während des Gießens einzubringen. In der Figur 3 ist erkennbar, dass die Belagträgerplatte 6 des zuspannseitigen Bremsbelags 4 mit kalottenförmigen Ausnehmungen 12, entsprechend der Figur 5, versehen ist, in denen die ballig geformten Stirnseiten der Druckstücke 10 einliegen, so dass auch hier der Bremsbelag 4 schiebbar gelagert ist.

Eine Stellspindel 8 mit dem balligen Druckstück 10 ist als Einzelheit in der Figur 6 dargestellt.

## Patentansprüche

1. Scheibenbremse, insbesondere für ein Nutzfahrzeug, mit einem eine Bremsscheibe (3) übergreifenden Bremssattel (1), in dem beidseitig mittels wenigstens einer pneumatisch oder elektromechanisch angetriebenen Zuspanneinrichtung gegen die Bremsscheibe (3) pressbare, jeweils eine Belagträgerplatte (6) und einen darauf befestigten Reibbelag (7) aufweisende Bremsbeläge (4, 5) positioniert sind, wobei die Zuspanneinrichtung mindestens einen, stirnseitig an der Belagträgerplatte (6) angreifenden Bremsstempel (8) aufweist, wobei zumindest einer der Bremsbeläge (4, 5) in radialer Richtung der Bremsscheibe (3) gelenkig, vorzugsweise kippbar gelagert ist, **dadurch gekennzeichnet, dass** die Belagträgerplatte (6) und ein Druckstück (10) des Bremsstempels (8) oder eine rückseitige Wand (2) des Bremssattels (1) miteinander korrespondierende Kippelemente aufweisen, die aus einer Erhebung (11) und einer daran angepassten Ausnehmung (12) bestehen, wobei die Erhebung (11) im Querschnitt konvex ausgebildet und in Form einer Leiste in der Belagträgerplatte (6) oder einer anliegenden Druckplatte, dem Druckstück (10) oder der Wand (2) angeordnet ist.

2. Scheibenbremse nach Anspruch 1, **dadurch gekennzeichnet, dass** die Erhebung (11) als Einsatz in der Wand (2) oder dem Druckstück (10) gehalten ist.

3. Scheibenbremse nach Anspruch 1 oder 2, **dadurch gekennzeichnet, dass** die Erhebung (11) an das Druckstück (10) angeformt ist.

4. Scheibenbremse nach einem der vorhergehenden Ansprüche, **dadurch gekennzeichnet, dass** sich die Ausnehmung (12) über die gesamte Länge oder einen Teilbereich der Belagträgerplatte (6) oder der Druckplatte erstreckt.

5. Scheibenbremse nach einem der vorhergehenden Ansprüche, **dadurch gekennzeichnet, dass** das Druckstück (10) kippbar an einer Stellspindel (9) des Bremsstempels (8) befestigt ist.

6. Scheibenbremse nach einem der vorhergehenden Ansprüche, **dadurch gekennzeichnet, dass** die Ausnehmung (12) als sich über die Länge der Belagträgerplatte (6) erstreckende Kehle ausgebildet ist.

## Claims

1. Disc brake, in particular for a commercial vehicle, comprising a brake calliper (1) which encompasses a brake disc (1) and in which brake pads (4, 5) capable of being pressed against the brake disc (3) by means of at least one pneumatically or electromechanically driven application device and having a backing plate (6) and a friction lining (7) are positioned on both sides, the application device comprising at least one brake piston (8) acting on the backing plate (6) at the end face, wherein at least one of the brake pads (4, 5) is mounted in an articulated manner, preferably tiltably, in the radial direction of the brake disc (3) **characterised in that** the backing plate (6) and a thrust piece (10) of the brake piston (8) or a rear wall (2) of the brake calliper (1) have tilting elements corresponding to one another, which are composed of an elevation (11) and of a recess (12) adapted thereto, wherein the elevation (11) is formed convexly in cross section and is arranged in the form of a strip in the backing plate (6) or an adjacent thrust plate, the thrust piece (10) or the wall (2).

2. Disc brake according to claim 1, **characterised in that** the elevation (11) is held as an insert in the wall (2) or the thrust piece (10).

3. Disc brake according to claim 1 or 2, **characterised in that** the elevation (11) is integrally formed onto the thrust piece (10).

4. Disc brake according to any of the preceding claims, **characterised in that** the recess (12) extends over the entire length or a sub region of the backing plate (6) or of the thrust plate.

5. Disc brake according to any of the preceding claims, **characterised in that** the thrust piece (10) is fastened tiltably to an adjusting spindle (9) of the brake piston (8).

6. Disc brake according to any of the preceding claims, **characterised in that** the recess (12) is designed as a channel extending over the length of the backing plate (6).

## Revendications

1. Frein à disque, en particulier pour un véhicule utilitaire, comprenant un étrier (1) de frein, qui chevauche un disque (3) de frein et dans lequel sont mis en position des garnitures (4, 5) de frein, qui peuvent être pressées des deux côtés au moyen d'au moins un dispositif de serrage à entraînement pneumatique ou électromécanique sur le disque (3) de frein, et qui ont chacune une plaque (6) de porte-garniture et une garniture (7) de friction qui y est fixée, le dispositif de serrage ayant au moins un piston (8) de frein attaquant, du côté frontal, la plaque (6) de porte-garniture, au moins l'une des garnitures (4, 5) de frein étant articulée, en pouvant de préférence basculer, dans la direction radiale du disque (3) de frein, **caractérisé en ce que** la plaque (6) de porte-garniture et une pièce (10) d'application d'une pression du piston (8) de frein ou une paroi (2) du côté arrière de l'étrier (1) de frein ont des éléments de basculement correspondant entre eux, qui sont constitués d'une saillie (11) et d'un évidemment (12) qui y est adapté, la saillie (11) étant convexe en section transversale et étant disposée sous la forme d'une baguette dans la plaque (6) de porte-garniture ou dans une plaque de pression s'y appliquant, dans la pièce (10) d'application d'une pression ou dans la paroi (2).

2. Frein à disque suivant la revendication 1, **caractérisé en ce que** la saillie (11) est maintenue sous la forme d'un insert dans la paroi (2) ou dans la pièce (10) d'application d'une pression.

3. Frein à disque suivant la revendication 1 ou 2, **caractérisé en ce que** la saillie (11) vient de matière avec la pièce (10) d'application d'une pression.

4. Frein à disque suivant l'une des revendications précédentes, **caractérisé en ce que** l'évidement (12) s'étend sur toute la longueur ou sur une région partielle de la plaque (6) de porte-garniture ou de la plaque d'application d'une pression.

5. Frein à disque suivant l'une des revendications précédentes, **caractérisé en ce que** la pièces (10) d'application d'une pression est fixée de manière à pouvoir basculer sur une broche (9) de réglage du piston (8) de frein.

6. Frein à disque suivant l'une des revendications précédentes, **caractérisé en ce que** l'évidemment (12) est constitué sous la forme d'une rainure s'étendant sur la longueur de la plaque (6) de porte-garniture.
